# EUROPÄISCHE PATENTSCHRIFT

(11) **EP 4 377 574 B1**
(45) Veröffentlichungstag und Bekanntmachung des Hinweises auf die Patenterteilung: **23.07.2025**
(21) Anmeldenummer: 22782828.2
(22) Anmeldetag: 12.09.2022
(51) Int. Cl.: F15B 13/04, F15B 13/043, F15B 20/00, F15B 11/068

(54) **SICHERHEITSVENTIL**
SAFETY VALVE
SOUPAPE DE SÉCURITÉ

(30) Priorität: 15.09.2021 DE 102021123936
(43) Veröffentlichungstag der Anmeldung: 05.06.2024
(73) Patentinhaber: Aventics GmbH, 30880 Laatzen (DE)
(72) Erfinder: MEYER, Heinz-Hermann, 30926 Seelze (DE); PILCHER, Martin, 30163 Hannover (DE)
(74) Vertreter: Spahn, Tobias
(86) Internationale Anmeldenummer: PCT/DE2022/100673
(87) Internationale Veröffentlichungsnummer: WO 2023/041113

(56) Entgegenhaltungen:
- DE-B4- 112012 004 574
- FR-A2- 2 566 549
- US-A- 5 337 788

## Beschreibung

### Technisches Gebiet

Die Erfindung betrifft ein Sicherheitsventil für Steuerungsaufgaben mit hohen Drücken und Durchflüssen.

### Stand der Technik

Für fluidische Steueraufgaben mit hohen Drücken und Durchflüssen bestehen betriebssicherheitstechnische Anforderungen, die sich beispielsweise aus der sicherheitsspezifischen Norm EN ISO 13849 ergeben. In der Praxis bestehen derartige Anforderungen beispielsweise beim Streckblasformen von Behältern aus Glas oder PET mit Drücken von bis zu 40 bar. Relevante Sicherheitsfunktionen sind hierbei das Verhindern des unerwarteten Anlaufs einer Maschine oder Anlage, sowie eine Energieableitungsfunktion zum sicheren Energiefrei-Schalten bzw. Entlasten der Maschine oder Anlage. In der Fluidtechnik werden als sicherheitsbezogene Teile der Steuerung hierfür unter anderem geeignete redundant angeordnete Ventile eingesetzt, sodass ein einzelner Fehler in einem dieser Teile nicht zum Verlust der Sicherheitsfunktion führt. Durch derartige redundante bzw. zweikanalige Strukturen, häufig im Zusammenspiel mit einer sensorischen Zustandsüberwachung zur Erkennung einzelner Fehler sowie einer geeigneten Steuerung werden höhere Kategorien und Performance Level im Sinne der Norm erreicht und die Wahrscheinlichkeit gefahrbringender Ausfälle minimiert, die zum Beispiel unerwartete Maschinenbewegungen oder Geräuschemissionen zur Folge haben können. Insbesondere bei Anwendungen mit hohen Drücken ist dabei auch der Schutz nachgelagerter Systemelemente vor Schäden durch plötzliche Druckanstiege von Bedeutung. Sensorische Zustandsüberwachungen in diesem Zusammenhang umfassen beispielsweise Näherungsschalter oder Drucksensoren, um einzelne Fehler anhand beispielsweise der Position der Ventilstößel oder des Druckniveaus bestimmter Ventilbereiche erkennen zu können.

Im Stand der Technik sind integrierte pneumatische Sicherheitsventillösungen für den Niederdruckbereich mit Schieberventilen bekannt, bei denen die Verhinderung des unerwarteten Anlaufs sowie das sichere Energiefrei-Schalten bzw. Entlüften von Maschinenkomponenten durch redundante Ventilfunktionen gewährleistet ist. Diese Lösungen eignen sich jedoch nicht für pneumatische Steueraufgaben mit hohen Drücken und Durchflüssen.

Im Stand der Technik ist es auch bekannt, redundante Ventilfunktionen unter Sicherheitsaspekten durch die Verschaltung mehrerer Einzelkomponenten zu gewährleisten, wobei sich für hohe Drücke und Durchflüsse insbesondere Sitzventillösungen eignen. Derartige verschaltete Lösungen sind durch ihre Vielzahl an Komponenten und Schnittstellen verhältnismäßig aufwendig hinsichtlich Kosten und Zeit für Installation, Inbetriebnahme und Parametrierung, Wartung im Betrieb sowie die Pflege oft verschiedener Lieferantenbeziehungen. Zusätzlich haben diese Lösungen konstruktive Nachteile, etwa ihren verhältnismäßig hohen Bauraumbedarf oder Energieverluste durch zahlreiche Strömungsumlenkungen, etwa bei der Verschaltung mittels Grundplatten. Zudem sind die üblicherweise verwendeten Sitzventile in ihrer Funktion nicht überschneidungsfrei, weshalb ein plötzlicher temporärer Druckanstieg am Entlastungsausgang beim Umschalten eines Ventils vom Energiefrei-Schalten (= Entlasten) auf das Energiezuschalten (= Beaufschlagen) einer Leitung oder Maschinenkomponente - also ein fluidischer Kurzschluss zwischen der Druckfluidversorgung und der Entlastung - nicht sicher auf einem rein konstruktiven Weg verhindert wird. Insbesondere bei hohen Drücken führen derartige Kurzschlüsse zu erheblichen unerwünschten Geräuschemissionen und Energieverlusten.

Aus der EP 1 645 755 A2 ist eine Softstartvorrichtung für Druckluftsysteme mit mehreren redundanten Entlüftungsschaltstellungen bekannt. Die EP 1 645 755 A2 offenbart lediglich Lösungen für die Verschaltung von Komponenten, jedoch nicht für deren konstruktiven Aufbau. Ferner sind keine Funktionen oder Mittel zur Verhinderung eines plötzlichen temporären Druckanstiegs am Entlüftungsausgang beim Umschalten eines Ventils von der Entlüftung auf die Belüftung einer Leitung oder Maschinenkomponente offenbart.

Die DE 11 2012 004 574 B4 offenbart eine Strömungsratensteuervorrichtung mit einem Öffnungs-/Schließventil, mit dem die Strömungsrate eines Druckfluids zwischen einem gedrosselten und einem ungedrosselten Zustand umschaltbar ist sowie mit zwei in Reihe angeordneten Schaltventilen, welche redundant jeweils mit einem gesonderten Entlastungsausgang verbindbar sind. Die von der DE 11 2012 004 574 B4 offenbarte Strömungsratensteuervorrichtung offenbart keinen umlenkungsarmen konstruktiven Aufbau und keine überschneidungsfreie Funktion der Schaltventile. Ferner sind keine Funktionen oder Mittel zur Verhinderung eines plötzlichen temporären Druckanstiegs am Entlastungsausgang beim Umschalten eines Ventils vom Energiefrei-Schalten auf das Energiezuschalten einer Leitung oder Maschinenkomponente offenbart.

### Offenbarung der Erfindung

Der Erfindung liegt die Aufgabe zu Grunde, ein Sicherheitsventil zum Schalten hoher Drücke und Durchflüsse bereitzustellen, mit welchem die Nachteile des Stands der Technik vermieden werden. Insbesondere soll ein Sicherheitsventil bereitgestellt werden, mit dem ein unerwarteter Anlauf verhindert und ein sicheres Energiefrei-Schalten gewährleistet wird und gleichzeitig ein plötzlicher temporärer Druckanstieg am Entlastungsausgang beim Umschalten vom Energiefrei-Schalten auf das Energiezuschalten durch rein konstruktive Mittel sicher verhindert ist. Ferner soll die konstruktive Gestaltung des Sicherheitsventils eine umlenkungsarme Strömungsführung ermöglichen.

Die Aufgabe wird erfindungsgemäß durch ein Sicherheitsventil nach Anspruch 1 gelöst. Vorteilhafte Weiterbildungen der Erfindung sind in den Unteransprüchen angegeben.

Den Kern der Erfindung bildet ein Sicherheitsventil zum Schalten hoher Drücke und Durchflüsse, mit einem Fluideingang und einem Fluidausgang, mit einer ersten Hauptstufe, welche in einer Ruhestellung den Fluidausgang mit einem ersten Entlastungsausgang verbindet und in einer Schaltstellung den Fluideingang mit einer Fluidverbindung zu einer zweiten Hauptstufe verbindet, der zweiten Hauptstufe, welche in einer Ruhestellung den Fluidausgang mit einem zweiten Entlastungsausgang verbindet und in einer Schaltstellung die Fluidverbindung mit dem Fluidausgang, wobei die beiden Hauptstufen jeweils als Sitzventil mit einem linearbeweglichen Stößel ausgestaltet sind, und wobei die erste Hauptstufe einen mehrteiligen Stößel aufweist, und beim Übergang von der Ruhe- in die Schaltstellung ein gegen eine erste Federbelastung betätigbarer erster Stößelteil in einem ersten Bewegungsabschnitt zunächst dichtend an einen zweiten Stößelteil stößt, wodurch ein Entlastungsdurchgang zum ersten Entlastungsausgang geschlossen wird, und mit der Bewegung auch des zweiten Stößelteils in einem zweiten Bewegungsabschnitt oder eines weiteren Stößelteils in einem weiteren Bewegungsabschnitt ein Beaufschlagungsdurchgang zwischen dem Fluideingang und der Fluidverbindung zu der zweiten Hauptstufe gegen eine zweite Federbelastung freigegeben wird, und die zweite Hauptstufe einen mehrteiligen Stößel aufweist, und beim Übergang von der Ruhe- in die Schaltstellung ein gegen eine erste Federbelastung betätigbarer erster Stößelteil in einem ersten Bewegungsabschnitt zunächst dichtend an einen zweiten Stößelteil stößt, wodurch ein Entlastungsdurchgang zum zweiten Entlastungsausgang geschlossen wird, und mit der Bewegung auch des zweiten Stößelteils in einem zweiten Bewegungsabschnitt oder eines weiteren Stößelteils in einem weiteren Bewegungsabschnitt ein Beaufschlagungsdurchgang zwischen der Fluidverbindung und dem Fluidausgang gegen eine zweite Federbelastung freigegeben wird.

Das erfindungsgemäße Sitzventil ist aufgrund der Ausgestaltung der beiden Hauptstufen in Sitzventilbauweise zum Schalten hoher Drücke und Durchflüsse geeignet. Gleichzeitig ist aufgrund seiner zweikanaligen Auslegung stets ein redundantes Energiefrei- und Zuschalten angeschlossener Verbraucher oder Maschinenkomponenten gewährleistet. Es müssen stets beide Hauptstufen schalten, bevor eine Beaufschlagung des Fluidausgangs erfolgt. Schaltet nur eine Hauptstufe, bleibt der Fluidausgang über den Entlastungsausgang der jeweils anderen Hauptstufe entlastet. Ein unerwartetes Anlaufen eines angeschlossenen Verbrauchers bei einem Einzelfehler wird damit verhindert. Auch wenn eine der beiden Hauptstufen beispielsweise aufgrund eines Federbruchs nicht in ihre geschlossene Ruhestellung zurückschaltet, wird der Fluidausgang bereits über diejenige Hauptstufe entlastet, die zurückgeschaltet hat. Ferner ist aufgrund der mehrteiligen Ausgestaltung der Stößel der beiden Hauptstufen ein plötzlicher temporärer Druckanstieg an den Entlastungsausgängen beim Umschalten vom Energiefrei-Schalten auf das Energiezuschalten durch rein konstruktive Mittel sicher verhindert, weil durch die zuerst betätigten ersten Stößelteile jeweils stets zunächst die Strömungswege zu den Entlastungsausgängen verschlossen werden, bevor die Beaufschlagungsdurchgänge geöffnet werden. Die beiden Hauptstufen schalten dabei überschneidungsfrei.

Eine Verringerung des erforderlichen Bauraums für das Sicherheitsventil wird erreicht, indem der zweite Stößelteil einer oder beider Hauptstufen mit einem innenliegenden Fluidkanal ausgebildet ist, welcher in eine dem ersten Stößelteil zugewandte erste Öffnung mündet, wobei die erste Öffnung durch das ihr zugewandte Ende des ersten Stößelteils verschlossen wird, wenn der erste Stößelteil dichtend an den zweiten Stößelteil stößt. Durch diese Ausgestaltung erfolgt ein Teil der Strömungsführung des Fluids bei der Entlastung des Fluidausgangs bauraumgünstig über Fluidkanäle, die in die zweiten Stößelteile integriert sind.

Eine weitere Bauraumreduzierung wird hierbei erreicht, indem der Fluidkanal an seinem der ersten Öffnung gegenüberliegendem Ende in eine zweite Öffnung mündet, welche in der Seitenfläche des zweiten Stößelteils angeordnet ist und die erste und die zweite Öffnung in fluidisch durch das Verschließen des Fluidkanals voneinander abtrennbare Bereiche des Sicherheitsventils münden. In einer alternativen Ausführung hierzu ist der Fluidkanal an seinem der ersten Öffnung gegenüberliegendem Ende von einer Querbohrung oder mehreren Querbohrungen gekreuzt, welche jeweils zwei Bohrungsöffnungen in der Seitenfläche des zweiten Stößelteils bilden, wobei die erste Öffnung und die Bohrungsöffnungen in fluidisch durch das Verschließen des Fluidkanals voneinander abtrennbare Bereiche des Sicherheitsventils münden. In dieser Ausführung ist aufgrund des Vorhandenseins mehrerer Ausgänge des Fluidkanals in der Seitenfläche eine größere Toleranz für die Einbaulage des Stößels bezüglich eines etwaigen Rotationsspiels gegeben, sodass stets eine Bohrungsöffnung weitestgehend umlenkungsarm in Strömungsrichtung zeigt.

Um einen kontrollierten Druckanstieg am Fluidausgang sicherzustellen und plötzliche Druckstöße auf angeschlossene Verbraucher oder Maschinenkomponenten zu verhindern, ist im Strömungsweg zwischen dem Fluideingang und der ersten Hauptstufe ein Anfahr-Ventil angeordnet, welches durch den am Fluidausgang anliegenden Druck schaltbar ist, wobei das Anfahr-Ventil ab Erreichen eines definierbaren Druckniveaus am Fluidausgang durch diesen als Schaltdruck betätigt von einem kleineren Strömungsquerschnitt auf einen größeren Strömungsquerschnitt umschaltet. Das erforderliche Druckniveau ist hierbei durch die konstruktive Ausgestaltung definiert. Zusätzlich kann das Druckniveau einstellbar realisiert sein, beispielsweise mittels einer Feder mit einstellbarer Vorspannung. Ein mit dem Fluidausgang verbundener Verbraucher oder verbundene Maschinenkomponenten werden nach einem zunächst verlangsamten Druckaufbau erst sukzessive mit der vollen fluidischen Systemleistung beaufschlagt, sobald das Anfahr-Ventil umgeschaltet hat. Das Anfahr-Ventil kann hierbei derart ausgestaltet sein, dass es von einem Strömungsweg mit einem kleineren Strömungsquerschnitt vollständig auf einen anderen Strömungsweg mit einem größeren Strömungsquerschnitt umschaltet, oder den Strömungsquerschnitt vergrößert, indem es durch den Schaltvorgang einen zusätzlichen, weiteren Strömungsquerschnitt freigibt.

In einer kompakten Ausführung des Sicherheitsventils mit einem Anfahr-Ventil ist der kleinere Strömungsquerschnitt durch einen den Absperrkörper des Anfahr-Ventils durchdringenden Fluidkanal gebildet. Hierdurch ist es nicht erforderlich, den kleineren Strömungsweg beispielsweise als gesonderten Drossel- oder Bypass-Kanal auszuführen. Der Drosselkanal ist in den Absperrkörper des Anfahr-Ventils, also beispielsweise ein Stößel, integriert. Zur Anpassung der fluidischen Systemleistung in der Softstartstellung ist das Anfahr-Ventil mit einer verstellbaren Drossel zur Veränderung des kleineren Strömungsquerschnitts ausgebildet.

In einer umlenkungsfreien Ausgestaltung des Sicherheitsventils sind die Beaufschlagungsdurchgänge der ersten und der zweiten Hauptstufe oder die Beaufschlagungsdurchgänge der ersten und der zweiten Hauptstufe und der größere Strömungsquerschnitt des Anfahr-Ventils relativ zueinander derart angeordnet, dass in den Schaltstellungen der Ventile zwischen den Beaufschlagungsdurchgängen oder den Beaufschlagungsdurchgängen und dem Strömungsquerschnitt ein linearer Strömungsweg gebildet ist. Hierdurch ist eine umlenkungsfreie und daher verlustarme Strömungsführung im Schaltzustand des Sicherheitsventils bei der Beaufschlagung des Fluidausgangs sichergestellt. Eine weitere Verbesserung ist insoweit erreicht, indem auch der Fluideingang und der Fluidausgang derart angeordnet sind, dass gemeinsam mit den Beaufschlagungsdurchgängen oder den Beaufschlagungsdurchgängen und dem Strömungsquerschnitt ein linearer Strömungsweg zwischen dem Fluideingang und dem Fluidausgang gebildet ist.

Die erste und zweite Hauptstufe sind vorzugsweise fluidisch betätigbar ausgestaltet, indem der erste Stößelteil jeweils an seinem dem zweiten Stößelteil abgewandten Ende mit einem Kolben ausgebildet ist, welcher auf seiner dem ersten Stößelteil abgewandten Seite mit einem Fluiddruck beaufschlagbar ist. In dieser Ausführung ist eine Verringerung der Anzahl äußerer Schnittstellen erreicht, indem die Beaufschlagung der Kolben jeweils über eine interne Steuerfluidversorgung mit dem am Fluideingang anliegenden Druck, beispielsweise mittels elektrisch schaltbarer Pilotventile, erfolgt.

Für eine möglichst kompakte und integrierte Ausgestaltung des Sicherheitsventils und eine Verringerung der für eine Installation und Inbetriebnahme erforderlichen Bauteile und Schnittstellen sind sämtliche Komponenten des Sicherheitsventils als Baueinheit in einem gemeinsamen Gehäuse ausgeführt.

Weitere Vorteile der Erfindung sind nachstehend gemeinsam mit der Beschreibung eines bevorzugten Ausführungsbeispiels der Erfindung anhand der Figuren näher dargestellt. Es zeigen:
- Fig. 1: eine schematische Schnittdarstellung eines Sicherheitsventils in Ruhestellung.
- Fig. 2: eine schematische Schnittdarstellung des Sicherheitsventils gemäß Fig. 1 in einer Softstartstellung.
- Fig. 3: eine schematische Schnittdarstellung des Sicherheitsventils gemäß Fig. 1 in vollständig durchgeschalteter Betriebsstellung.
- Fig. 4: die Schnittdarstellung gemäß Fig. 3 mit eingezeichnetem Strömungsweg.

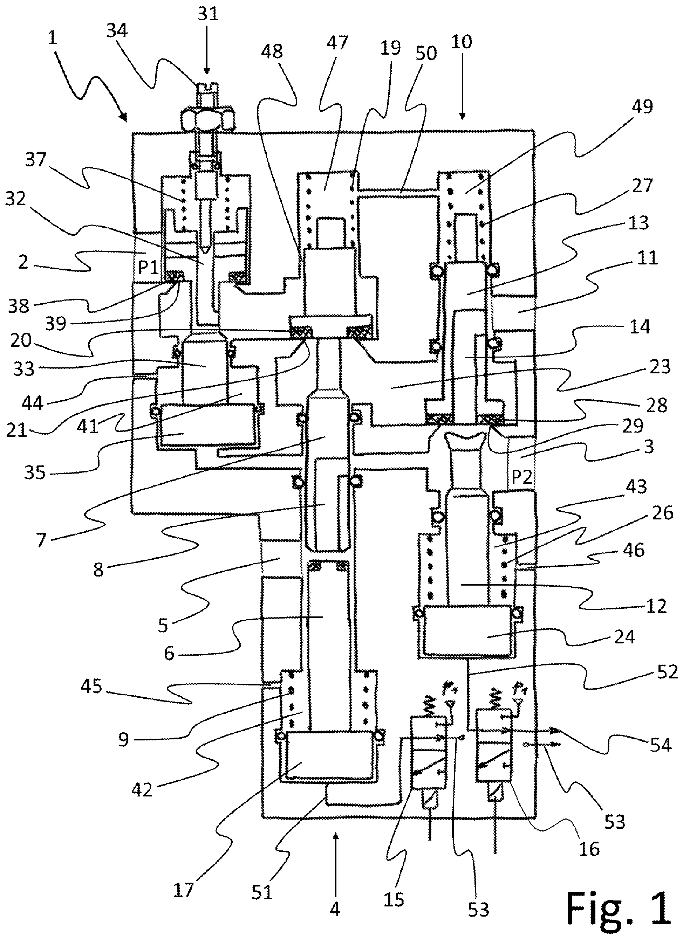

Die Fig. 1 bis 4 zeigen in einer schematischen Schnittdarstellung das Sicherheitsventil 1, welches zum Schalten hoher Drücke und Durchflüsse zwischen einem Fluideingang 2 und einem Fluidausgang 3 geeignet ist. Die Darstellungen der Fig. 1 bis 4 sind zeichnerisch vereinfachte schematische Darstellungen des Sicherheitsventils 1 ohne detailliert ausgeführte Randbereiche entlang der Strömungsführung, die zur Verringerung innerer Reibung bei einer konstruktiven Ausführung in Praxis beispielsweise mit glatten Oberflächen und strömungsangepassten Kantenübergängen und Konturen etwa der Fluidpassage oder Ventilsitzbereiche ausgeführt werden. Fig. 1 zeigt das Sicherheitsventil 1 in seiner unbestromten Ruhestellung. Der Fluidausgang 3 dient zur Verbindung mit einem Verbraucher (nicht dargestellt), der beispielsweise ein Blasformwerkzeug zur Blasformung von Behältern aus PET-Vorformlingen sein kann. Das Sicherheitsventil 1 weist eine erste Hauptstufe 4 auf, die in Fig. 1 in ihrer Ruhestellung dargestellt ist, in der sie den Fluidausgang 3 mit dem ersten Entlüftungsausgang 5 verbindet. Die erste Hauptstufe 4 ist in Sitzventilbauweise ausgestaltet und besitzt einen linearbeweglichen, zweiteiligen Stößel, der durch den unteren ersten Stößelteil 6 und den oberen zweiten Stößelteil 7 gebildet ist. In ihrer Ruhestellung verbindet die erste Hauptstufe 4 den Fluidausgang 3 mit dem ersten Entlastungsausgang 5, indem der zweite Stößelteil 7 mit einem inneren Fluidkanal 8 ausgebildet ist, über den ein Arbeitsfluid durch einen Öffnungsspalt zwischen dem ersten Stößelteil 6 und dem zweiten Stößelteil 7 zum ersten Entlastungsausgang 5 entweichen kann, wobei der erste Stößelteil 6 durch die Feder 9 in seiner Ausgangsstellung gehalten ist. Das Sicherheitsventil 1 weist ferner eine zweite Hauptstufe 10 auf, die in Fig. 1 ebenfalls in ihrer Ruhestellung dargestellt ist, in der sie den Fluidausgang 3 mit dem zweiten Entlastungsausgang 11 verbindet. Die zweite Hauptstufe 10 ist ebenfalls in Sitzventilbauweise ausgestaltet und besitzt einen linearbeweglichen, zweiteiligen Stößel, der durch den unteren ersten Stößelteil 12 und den oberen zweiten Stößelteil 13 gebildet ist. In ihrer Ruhestellung verbindet die zweite Hauptstufe 10 den Fluidausgang 3 zusätzlich zum ersten Entlastungsausgang 5 redundant mit dem zweiten Entlastungsausgang 11, indem der zweite Stößelteil 13 mit einem inneren Fluidkanal 14 ausgebildet ist, über den ein Arbeitsfluid durch einen Öffnungsspalt zwischen dem ersten Stößelteil 12 und dem zweiten Stößelteil 13 über den Fluidkanal 14 zum zweiten Entlastungsausgang 11 entweichen kann. Das Sicherheitsventil 1 weist ferner zwei elektrisch schaltbare Pilotventile 15 und 16 auf, mit denen die Stößel der beiden Hauptstufen 4 und 10 betätigbar sind. Die Pilotventile 15 und 16 sind in der Darstellung Fig.1 schematisch mit Schaltsymbolen dargestellt.

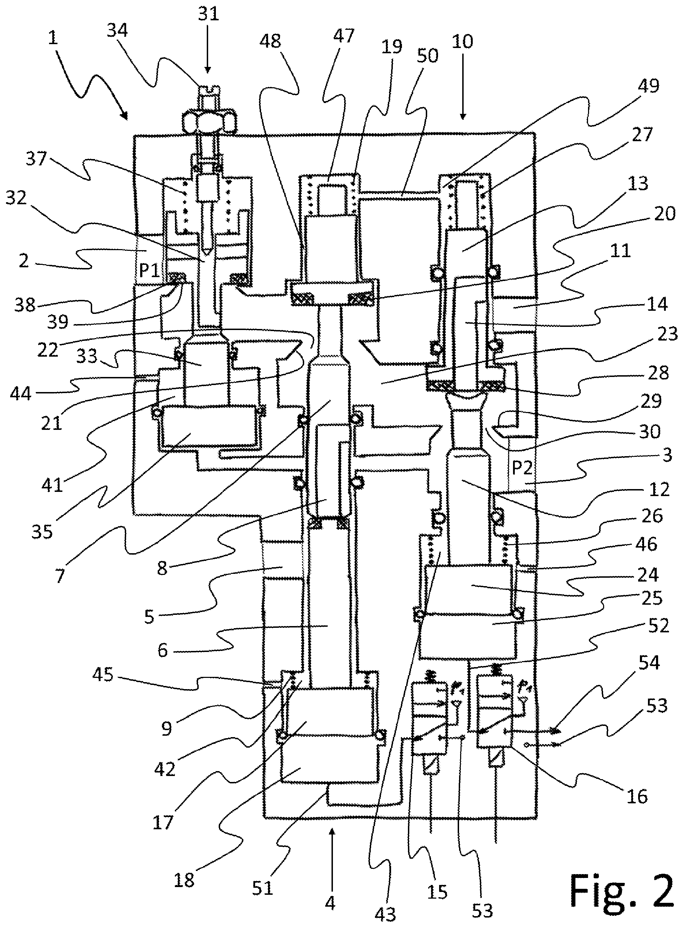

Fig. 2 zeigt das Sicherheitsventil in einer Softstartstellung bei der nur die beiden Hauptstufen 4 und 10 geschaltet sind und die ein langsames Anfahren eines mit dem Fluidausgang 3 verbundenen Verbrauchers (nicht dargestellt) bewirkt. Beim Schalten des Pilotventils 15 wird der Kolben 17 des ersten Stößelteils 6 der ersten Hauptstufe 4 über die Kolbenkammer 18 intern mit dem am Fluideingang 2 anliegenden Ventileingangsdruck P1 beaufschlagt. Hierdurch wird der erste Stößelteil 6 gegen die Kraft der Feder 9 zunächst in einem ersten Bewegungsabschnitt nach oben bewegt, bis er dichtend an den zweiten Stößelteil 7 anstößt, wobei er den Fluidkanal 8 dichtend gegen den ersten Entlastungsausgang 5 absperrt. In einer weiteren Bewegung hebt der erste Stößelteil 6 in einem zweiten Bewegungsabschnitt den zweiten Stößelteil 7 hiernach entgegen der Kraft der Feder 19 an, wobei der im oberen Abschnitt des zweiten Stößelteils 7 gebildete Dichtkörper 20 vom Ventilsitz 21 abhebt und einen Beaufschlagungsdurchgang 22 zwischen dem Fluideingang 2 und der Fluidverbindungspassage 23 zur zweiten Hauptstufe 10 freigibt. Nach der Vollziehung des zweiten Bewegungsabschnitts befindet sich die erste Hauptstufe 4 vollständig in ihrer Schaltstellung, in welcher eine Fluidverbindung zwischen dem Fluideingang 2 und der Fluidverbindungspassage 23 zur zweiten Hauptstufe 10 hergestellt ist. Beim Schalten des Pilotventils 16 wird der Kolben 24 des ersten Stößelteils 12 der zweiten Hauptstufe 10 über die Kolbenkammer 25 ebenfalls intern mit dem am Fluideingang 2 anliegenden Ventileingangsdruck P1 beaufschlagt. Hierdurch wird der erste Stößelteil 12 gegen die Kraft der Feder 26 zunächst in einem ersten Bewegungsabschnitt nach oben bewegt, bis er dichtend an den zweiten Stößelteil 13 anstößt, wobei er den Fluidkanal 14 dichtend gegen den zweiten Entlastungsausgang 11 absperrt. In der weiteren Bewegung hebt der erste Stößelteil 12 in einem zweiten Bewegungsabschnitt den zweiten Stößelteil 13 entgegen der Kraft der Feder 27 an, wobei sich der im oberen Abschnitt des zweiten Stößelteils 13 gebildete Dichtkörper 28 vom Ventilsitz 29 abhebt und einen Beaufschlagungsdurchgang 30 zwischen der Fluidverbindungspassage 23 und dem Fluidausgang 3 freigibt. Nach der Vollziehung des zweiten Bewegungsabschnitts befindet sich die zweite Hauptstufe 10 vollständig in ihrer Schaltstellung, in welcher die Fluidpassage 23 mit dem Fluidausgang 3 verbunden ist. Der Fluidausgang 3 wird nun mit einem gegenüber der möglichen Systemleistung verminderten Volumenstrom versorgt, der zu einem verlangsamten Druckaufbau am Fluidausgang 3 führt, da sich das im Strömungsweg des Arbeitsfluids zwischen dem Fluideingang 2 und der ersten Hauptstufe 4 angeordnete Anfahr-Ventil 31 in seiner Ruhestellung befindet. In dieser Softstartstellung strömt das Arbeitsfluid nur über den kleineren Strömungsquerschnitt des Drosselkanals 32 im einteiligen Stößel 33 des Anfahr-Ventils 31 in das Sicherheitsventil 1 ein. Der Strömungsquerschnitt ist über die Lage der Drosselschraube 34 einstellbar. Befinden sich beide Hauptstufen 4 und 10 in ihrer Schaltstellung, wird der Fluidausgang 3 sowie ein daran angeschlossener Verbraucher mit einem auf diese Weise verminderten Volumenstrom beaufschlagt, wodurch ein verlangsamter Druckaufbau am Fluidausgang 3 erfolgt, der ein "sanftes" oder verlangsamtes Anfahren eines angeschlossenen Verbrauchers gewährleistet.

Aufgrund der zweikanaligen Auslegung des Sicherheitsventils 1 ist stets ein redundantes Energiefrei- und Zuschalten von angeschlossenen Verbrauchern oder angeschlossener Maschinenkomponenten auch im Falle eines Fehlers oder des Ausfalls einer der beiden Hauptstufen 4 oder 10 gewährleistet. Es müssen stets beide Hauptstufen 4 und 10 schalten, bevor der Fluidausgang 3 beaufschlagt wird. Schaltet bei entlasteter Anlage und beabsichtigter Ruhestellung fehlerbedingt eine der beiden Hauptstufen 4 oder 10, bleibt der Fluidausgang 3 über den Entlastungsausgang derjenigen Hauptstufe entlastet, die in ihrer beabsichtigten entlasteten Ruhestellung geblieben ist, sodass ein ungewolltes Anfahren verhindert ist. Wenn bei beaufschlagter Anlage und beabsichtigtem Wechsel in die Ruhestellung nur eine der beiden Hauptstufen 4 oder 10 in ihre entlastete Ruhestellung zurückschaltet - beispielsweise im Falle eines Federbruchs der anderen Hauptstufe -, wird der Fluidausgang 3 allein bereits über diejenige der beiden Hauptstufen 4 oder 10 entlastet, die jeweils zurückgeschaltet hat, sodass ein redundantes Energiefrei-Schalten gewährleistet ist. Durch eine ergänzende sensorische Zustandsüberwachung können solche einzelnen Fehler erkannt und höhere Kategorien und Performance Level im Sinne der Norm erreicht werden, wie im Stand der Technik beschrieben.

Aufgrund der zweiteiligen Ausgestaltung der Stößel der beiden Hauptstufen 4 und 10 besitzt das Sicherheitsventil 1 zudem eine überschneidungsfreie Ventilfunktion. Ein plötzlicher temporärer Druckanstieg an einem der Entlastungsausgänge 5 oder 11 beim Umschalten der Hauptstufen 4 und 10 von der entlasteten Ruhestellung in die beaufschlagte Schaltstellung ist durch rein konstruktive Mittel sicher verhindert, weil die ersten Stößelteile 6 und 12 jeweils stets zunächst die Strömungswege zu den Entlastungsausgängen 5 und 11 verschließen, bevor die Beaufschlagungsdurchgänge durch die Bewegung der jeweils zweiten Stößelteile 8 und 13 geöffnet werden.

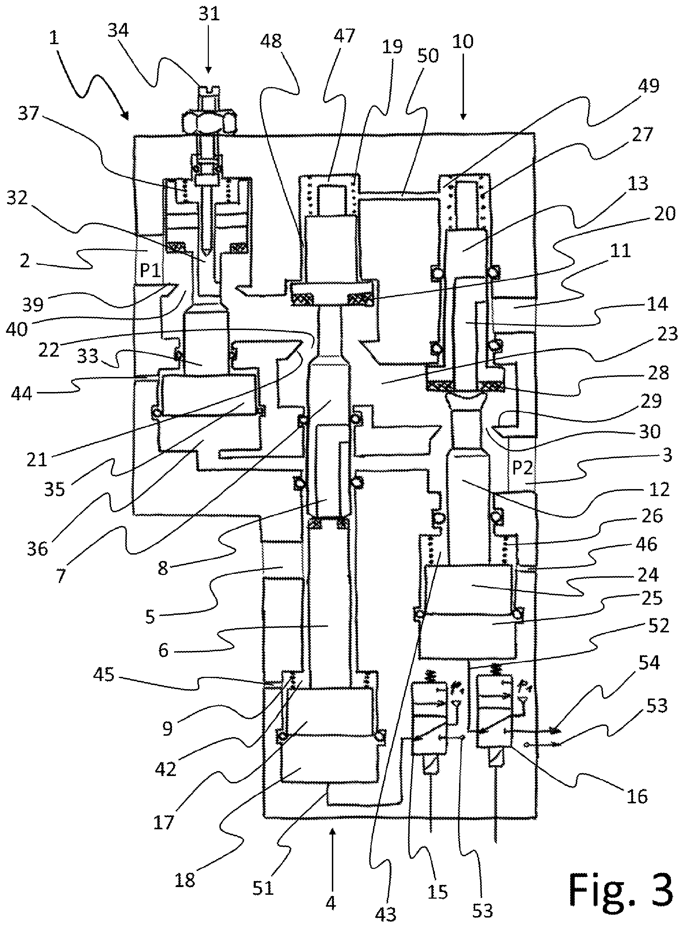

Fig. 3 zeigt das Sicherheitsventil in seiner vollständig durchgeschalteten Betriebsstellung, bei der zusätzlich zu den beiden Hauptstufen 4 und 10 auch das Anfahr-Ventil 31 geschaltet ist und die Beaufschlagung des Fluidausgangs 3 mit der vollen Systemleistung bei maximalem Strömungsquerschnitt bewirkt. Befinden sich beide Hauptstufen 4 und 10 in ihrer Schaltstellung, wird der Fluidausgang 3 sowie ein daran angeschlossener Verbraucher zunächst mit einem verminderten Volumenstrom beaufschlagt, wodurch ein "sanftes" oder verlangsamtes Anfahren eines angeschlossenen Verbrauchers gewährleistet ist. Der Ventilausgangsdruck P2 steigt hierbei allmählich an. Das Anfahr-Ventil 31 ist derart ausgebildet, dass es ab Erreichen des Schaltdrucks am Fluidausgang 3 selbsttätig von seiner geschlossenen Ruhestellung in seine Öffnungsstellung schaltet. Hierbei wird der Kolben 35 über die Kolbenkammer 36 mit dem am Fluidausgang 3 anstehenden Schaltdruck beaufschlagt, wodurch der einteilige Stößel 33 gegen die Kraft der Feder 37 nach oben bewegt wird, wobei sich der im oberen Abschnitt des Stößels 33 gebildete Dichtkörper 38 vom Ventilsitz 39 abhebt und den Beaufschlagungsdurchgang 40 zwischen dem Fluideingang 2 und der ersten Hauptstufe 4 freigibt. Der Beaufschlagungsdurchgang 40 besitzt einen gegenüber dem Strömungsquerschnitt des Drosselkanals 32 größeren Strömungsquerschnitt. In dieser geöffneten Schaltstellung des Anfahr-Ventils 31 strömt das Arbeitsfluid vom Ventileingang 2 über den größeren Strömungsquerschnitt des Beaufschlagungsdurchgangs 40 in das Sicherheitsventil 1 ein, wodurch der Ventilausgangsdruck P2 auf den Betriebsdruck ansteigt und die volle fluidische Leistung abgerufen werden kann.

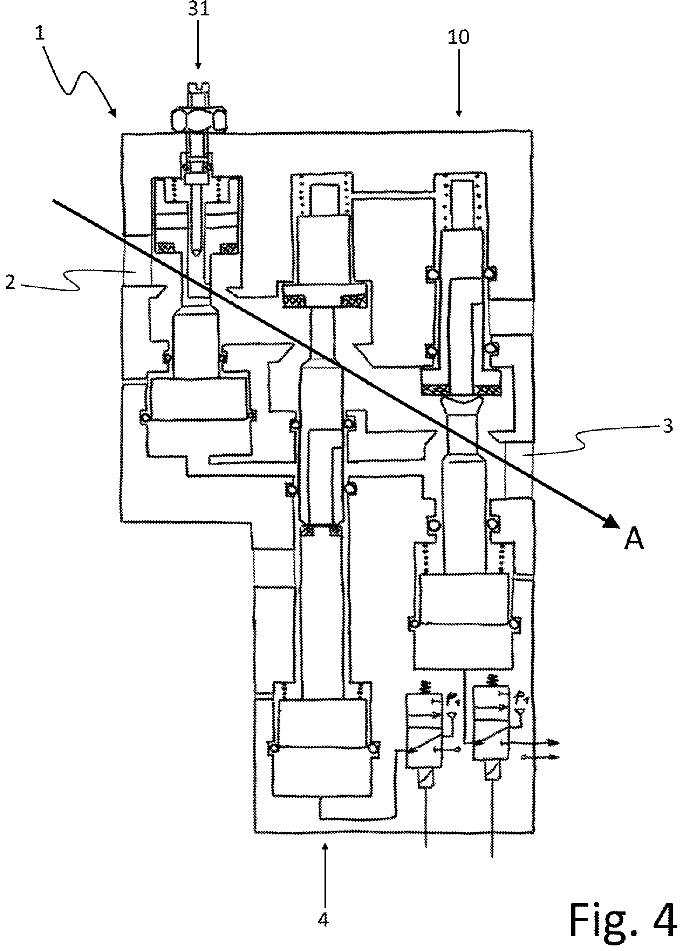

Fig. 4 zeigt die schematische Schnittdarstellung gemäß Fig. 3 mit dem eingezeichnetem Strömungsweg A. Die meisten Bezugsziffern wurden in Fig. 4 zu Gunsten einer besseren Erkennbarkeit des Strömungswegs A durch das geschaltete und vollständig geöffnete Sicherheitsventil 1 aus Darstellungsgründen weggelassen. Das Sicherheitsventil 1 ist konstruktiv umlenkungsfrei ausgeführt, indem sämtliche Beaufschlagungsdurchgänge 40, 22 und 30 zusammen mit dem Fluideingang 2 und Fluidausgang 3 zueinander derart versetzt angeordnet sind, dass sie in der Schaltstellung des Anfahr-Ventils 31 und der beiden Hauptstufen 4 und 10 einen linearen Strömungsweg A bilden, wie dies in Fig. 4 eingezeichnet ist.

Das Sicherheitsventil 1 bildet ferner gleichzeitig eine hochkompakte und integrierte Baueinheit, was insbesondere dadurch erreicht ist, dass die zweiten Stößelteile 7 und 13 und der einteilige Stößel 33 jeweils teilweise als Hohlstößel mit den innenliegenden Fluidkanälen 8 und 14 sowie dem Drosselkanal 32 ausgeführt sind und sämtliche Komponenten als Baueinheit in ein gemeinsames Gehäuse integriert sind.

Die Kammern 41, 42 und 43 sind zur Gewährleistung des Druckausgleichs durch die Atembohrungen 44, 45, und 46 mit der Atmosphäre verbunden. Diese Atembohrungen können alternativ als interne Kanäle im Gehäuse ausgeführt sein, die einzeln oder zusammengefasst in die Atmosphäre entlastet werden. Ferner kann der Druckausgleich von Kammer 42 statt über Atembohrungen oder Fluidkanäle auch über einen Ringspalt zwischen dem Stößel 6 und der Gehäuseinnenwand zum ersten Entlastungsausgang 5 erfolgen, also in die nächste Kammer gleichen Druckniveaus, wie dies konstruktiv bei der der Kammer 47 der Fall ist. Dort ist über den Ringspalt 48 zwischen dem oberen Abschnitt des zweiten Stößelteils 7 und dem diesen umgebenden Gehäuseabschnitt ebenfalls ein Druckausgleich hergestellt, wenn auch auf Hochdruckniveau P1 statt Atmosphärenniveau. Das gleiche gilt für die Kammer 49, die hierzu über den Atemkanal 50 mit der Kammer 47 oder einer anderen Kammer verbunden ist, wo ebenfalls das Druckniveau P1 anliegt. Die Kolbenkammern 18 und 25 sind über die Verbindungskanäle 51, 52 zu den Pilotventilen 15 und 16 beaufschlagbar und entlastbar, wobei die Entlastung jeweils mit über die Pilotventilausgänge 53, 54 erfolgt, beispielweise über einzelne oder zusammengefasste Kanäle durch das Gehäuse in die Atmosphäre.

### Bezugszeichenliste

- 1: Sicherheitsventil
- 2: Fluideingang
- 3: Fluidausgang
- 4: erste Hauptstufe
- 5: erster Entlastungsausgang
- 6, 12: erster Stößelteil
- 7, 13: zweiter Stößelteil
- 8, 14: Fluidkanal
- 9, 19, 26, 27, 37: Feder
- 10: zweite Hauptstufe
- 11: zweiter Entlastungsausgang
- 15, 16: Pilotventil
- 17, 24, 35: Kolben
- 18, 25, 36: Kolbenkammer
- 20, 28, 38: Dichtkörper
- 21, 29, 39: Ventilsitz
- 22, 30, 40: Beaufschlagungsdurchgang
- 23: Fluidverbindungspassage
- 31: Anfahr-Ventil
- 32: Drosselkanal
- 33: einteiliger Stößel
- 34: Drosselschraube
- 41, 42, 43, 47, 49: Kammer
- 44, 45, 46: Atembohrung
- 48: Ringspalt
- 50: Atemkanal
- 51, 52: Verbindungskanal
- 53, 54: Pilotventilausgang

## Patentansprüche

1. Sicherheitsventil (1) zum Schalten hoher Drücke und Durchflüsse, mit einem Fluideingang (2) und einem Fluidausgang (3), mit einer ersten Hauptstufe (4), welche in einer Ruhestellung den Fluidausgang (3) mit einem ersten Entlastungsausgang (5) verbindet und in einer Schaltstellung den Fluideingang (2) mit einer Fluidverbindung zu einer zweiten Hauptstufe (10) verbindet, der zweiten Hauptstufe (10), welche in einer Ruhestellung den Fluidausgang (3) mit einem zweiten Entlastungsausgang (11) und in einer Schaltstellung die Fluidverbindung mit dem Fluidausgang (3) verbindet, wobei die beiden Hauptstufen (4, 10) jeweils als Sitzventil mit einem linearbeweglichen Stößel ausgestaltet sind, **dadurch gekennzeichnet, dass** die erste Hauptstufe (4) einen mehrteiligen Stößel aufweist, und beim Übergang von der Ruhein die Schaltstellung ein gegen eine erste Federbelastung betätigbarer erster Stößelteil (6) in einem ersten Bewegungsabschnitt zunächst dichtend an einen zweiten Stößelteil (7) stößt, wodurch ein Entlastungsdurchgang zum ersten Entlastungsausgang (5) geschlossen wird, und mit der Bewegung auch des zweiten Stößelteils (7) in einem zweiten Bewegungsabschnitt oder eines weiteren Stößelteils in einem weiteren Bewegungsabschnitt ein Beaufschlagungsdurchgang zwischen dem Fluideingang (2) und der Fluidverbindung zu der zweiten Hauptstufe (10) gegen eine zweite Federbelastung freigegeben wird, und die zweite Hauptstufe (10) einen mehrteiligen Stößel aufweist, und beim Übergang von der Ruhe- in die Schaltstellung ein gegen eine erste Federbelastung betätigbarer erster Stößelteil (12) in einem ersten Bewegungsabschnitt zunächst dichtend an einen zweiten Stößelteil (13) stößt, wodurch ein Entlastungsdurchgang zum zweiten Entlastungsausgang (11) geschlossen wird, und mit der Bewegung auch des zweiten Stößelteils (13) in einem zweiten Bewegungsabschnitt oder eines weiteren Stößelteils in einem weiteren Bewegungsabschnitt ein Beaufschlagungsdurchgang zwischen der Fluidverbindung und dem Fluidausgang (3) gegen eine zweite Federbelastung freigegeben wird.

2. Sicherheitsventil (1) nach Anspruch 1, **dadurch gekennzeichnet, dass** der zweite Stößelteil (7) der ersten oder der zweite Stößelteil (7, 13) der ersten und der zweiten Hauptstufe mit einem innenliegenden Fluidkanal (8, 14) ausgebildet ist oder sind, welcher in eine dem ersten Stößelteil (6, 12) zugewandte erste Öffnung mündet, wobei die erste Öffnung durch das ihr zugewandte Ende des ersten Stößelteils (6, 12) verschlossen wird, wenn der erste Stößelteil (6, 12) dichtend an den zweiten Stößelteil (7, 13) stößt.

3. Sicherheitsventil (1) nach Anspruch 2, **dadurch gekennzeichnet, dass** der Fluidkanal (8, 14) an seinem der ersten Öffnung gegenüberliegendem Ende in eine zweite Öffnung mündet, welche in der Seitenfläche des zweiten Stößelteils (7, 13) angeordnet ist und die erste und die zweite Öffnung in fluidisch durch das Verschließen des Fluidkanals (8, 14) voneinander abtrennbare Bereiche des Sicherheitsventils (1) münden.

4. Sicherheitsventil (1) nach Anspruch 2, **dadurch gekennzeichnet, dass** der Fluidkanal (8, 14) an seinem der ersten Öffnung gegenüberliegendem Ende von einer Querbohrung oder mehreren Querbohrungen gekreuzt ist, welche jeweils zwei Bohrungsöffnungen in der Seitenfläche des zweiten Stößelteils (7, 13) bilden, wobei die erste Öffnung und die Bohrungsöffnungen in fluidisch durch das Verschließen des Fluidkanals (8, 14) voneinander abtrennbare Bereiche des Sicherheitsventils (1) münden.

5. Sicherheitsventil (1) nach einem der Ansprüche 1 bis 4, **dadurch gekennzeichnet, dass** im Strömungsweg zwischen dem Fluideingang (2) und der ersten Hauptstufe (4) ein Anfahr-Ventil (31) angeordnet ist, welches durch den am Fluidausgang (3) anliegenden Druck schaltbar ist, wobei das Anfahr-Ventil (31) ab Erreichen eines definierbaren Druckniveaus am Fluidausgang (3) durch diesen als Schaltdruck betätigt von einem kleineren Strömungsquerschnitt auf einen größeren Strömungsquerschnitt umschaltet.

6. Sicherheitsventil (1) nach Anspruch 5, **dadurch gekennzeichnet, dass** der kleinere Strömungsquerschnitt durch einen den Absperrkörper des Anfahr-Ventils (31) durchdringenden Fluidkanal gebildet ist.

7. Sicherheitsventil (1) nach Anspruch 6, **dadurch gekennzeichnet, dass** das Anfahr-Ventil (31) mit einer verstellbaren Drossel zur Einstellung des kleineren Strömungsweges ausgebildet ist.

8. Sicherheitsventil (1) nach einem der Ansprüche 1 bis 7, **dadurch gekennzeichnet, dass** die Beaufschlagungsdurchgänge der ersten und der zweiten Hauptstufe (10) oder die Beaufschlagungsdurchgänge der ersten und der zweiten Hauptstufe (4, 10) und der größere Strömungsquerschnitt des Anfahr-Ventils (31) relativ zueinander derart angeordnet sind, dass in den Schaltstellungen der Ventile zwischen den Beaufschlagungsdurchgängen oder den Beaufschlagungsdurchgängen und dem größeren Strömungsquerschnitt ein linearer Strömungsweg gebildet ist.

9. Sicherheitsventil (1) nach Anspruch 8, **dadurch gekennzeichnet, dass** auch der Fluideingang (2) und der Fluidausgang (3) derart angeordnet sind, dass gemeinsam mit den Beaufschlagungsdurchgängen oder den Beaufschlagungsdurchgängen und dem größeren Strömungsquerschnitt ein linearer Strömungsweg zwischen dem Fluideingang (2) und dem Fluidausgang (3) gebildet ist.

10. Sicherheitsventil (1) nach einem der Ansprüche 1 bis 9, **dadurch gekennzeichnet, dass** die erste und zweite Hauptstufe (4, 10) fluidisch betätigbar ausgestaltet sind, indem der erste Stößelteil (6, 12) jeweils an seinem dem zweiten Stößelteil (7, 13) abgewandten Ende mit einem Kolben (17, 24) ausgebildet ist, welcher auf seiner dem ersten Stößelteil (6, 12) abgewandten Seite mit einem Fluiddruck beaufschlagbar ist.

11. Sicherheitsventil (1) nach Anspruch 10, **dadurch gekennzeichnet, dass** die Beaufschlagung der Kolben (17, 24) jeweils über ein schaltbares Pilotventil (15, 16) gesteuert ist, wobei die Beaufschlagung der Kolben (17, 24) jeweils über eine interne Steuerfluidversorgung mit dem am Fluideingang (2) anliegenden Druck erfolgt.

12. Sicherheitsventil (1) nach einem Ansprüche 1 bis 11, **dadurch gekennzeichnet, dass** sämtliche Komponenten als Baueinheit in einem gemeinsamen Gehäuse ausgeführt sind.

## Claims

1. Safety valve (1) for switching high pressures and flow rates, comprising a fluid inlet (2), a fluid outlet (3), and a first main stage (4) which, in a rest position, connects the fluid outlet (3) to a first relief outlet (5) and, in a switching position, connects the fluid inlet (2) to a fluid connection of a second main stage (10), and comprising the second main stage (10) which, in a rest position, connects the fluid outlet (3) to a second relief outlet (11) and, in a switching position, connects the fluid connection to the fluid outlet (3), wherein the two main stages (4, 10) are each designed as a seat valve having a linearly movable tappet, **characterized in that** the first main stage (4) has a multi-part tappet, and during the transition from the rest position to the switching position, a first tappet part (6), which can be actuated counter to a first spring load, initially sealingly abuts a second tappet part (7) in a first movement portion, as a result of which a relief passage to the first relief outlet (5) is closed, and with the movement of the second tappet part (7) in a second movement portion or of an additional tappet part in an additional movement portion, a pressurization passage between the fluid inlet (2) and the fluid connection of the second main stage (10) is opened counter to a second spring load, and the second main stage (10) has a multi-part tappet, and during the transition from the rest position to the switching position, a first tappet part (12), which can be actuated counter to a first spring load, initially sealingly abuts a second tappet part (13) in a first movement portion, as a result of which a relief passage to the second relief outlet (11) is closed, and with the movement of the second tappet part (13) in a second movement portion or of an additional tappet part in an additional movement portion, a pressurization passage between the fluid connection and the fluid outlet (3) is opened counter to a second spring load.

2. Safety valve (1) according to claim 1, **characterized in that** the second tappet part (7) of the first main stage or the second tappet part (7, 13) of the first and the second main stage is or are formed having an internal fluid channel (8, 14) which opens into a first opening facing the first tappet part (6, 12), wherein the first opening is closed by the end of the first tappet part (6, 12) facing said opening when the first tappet part (6, 12) sealingly abuts the second tappet part (7, 13).

3. Safety valve (1) according to claim 2, **characterized in that** the fluid channel (8, 14), at its end opposite the first opening, opens into a second opening which is arranged in the lateral surface of the second tappet part (7, 13), and the first and the second opening open into regions of the safety valve (1) which can be fluidically separated from one another by closing the fluid channel (8, 14).

4. Safety valve (1) according to claim 2, **characterized in that** the fluid channel (8, 14), at its end opposite the first opening, is crossed by a transverse bore or a plurality of transverse bores which each form two bore openings in the lateral surface of the second tappet part (7, 13), wherein the first opening and the bore openings open into regions of the safety valve (1) which can be fluidically separated from one another by closing the fluid channel (8, 14).

5. Safety valve (1) according to any of claims 1 to 4, **characterized in that** a start-up valve (31) which can be switched by the pressure applied at the fluid outlet (3) is arranged in the flow path between the fluid inlet (2) and the first main stage (4), wherein, when a definable pressure level is reached at the fluid outlet (3), the start-up valve (31) switches from a smaller flow cross section to a larger flow cross section, actuated by said pressure level as a switching pressure,

6. Safety valve (1) according to claim 5, **characterized in that** the smaller flow cross section is formed by a fluid channel penetrating the shut-off body of the start-up valve (31).

7. Safety valve (1) according to claim 6, **characterized in that** the start-up valve (31) is formed having an adjustable throttle for adjusting the smaller flow path.

8. Safety valve (1) according to any of claims 1 to 7, **characterized in that** the pressurization passages of the first and the second main stage (10), or the pressurization passages of the first and the second main stage (4, 10) and the larger flow cross section of the start-up valve (31) are arranged relative to one another such that, in the switching positions of the valves, a linear flow path is formed between the pressurization passages, or between the pressurization passages and the larger flow cross section.

9. Safety valve (1) according to claim 8, **characterized in that** the fluid inlet (2) and the fluid outlet (3) are also arranged such that, together with the pressurization passages, or together with the pressurization passages and the larger flow cross section, a linear flow path is formed between the fluid inlet (2) and the fluid outlet (3).

10. Safety valve (1) according to any of claims 1 to 9, **characterized in that** the first and the second main stage (4, 10) are designed to be fluidically actuatable, **in that** the first tappet part (6, 12) is in each case formed having a piston (17, 24) at its end facing away from the second tappet part (7, 13), which piston can be pressurized by fluid pressure on its side facing away from the first tappet part (6, 12).

11. Safety valve (1) according to claim 10, **characterized in that** the pressurization of the pistons (17, 24) is controlled in each case via a switchable pilot valve (15, 16), wherein the pressurization of the pistons (17, 24) is carried out in each case via an internal control fluid supply, using the pressure applied at the fluid inlet (2).

12. Safety valve (1) according to any of claims 1 to 11, **characterized in that** all of the components are designed as a structural unit in a common housing.

## Revendications

1. Soupape de sûreté (1) pour la commutation de pressions et de débits élevés, comportant une entrée de fluide (2) et une sortie de fluide (3), comportant un premier étage principal (4) qui, dans une position de repos, relie la sortie de fluide (3) à une première sortie de décharge (5) et qui, dans une position de commutation, relie l'entrée de fluide (2) à une liaison fluidique vers un second étage principal (10), le second étage principal (10) qui, dans une position de repos, relie la sortie de fluide (3) à une seconde sortie de décharge (11) et qui, dans une position de commutation, relie la liaison fluidique à la sortie de fluide (3), dans laquelle les deux étages principaux (4, 10) sont respectivement conçus comme une soupape à siège comportant un poussoir mobile linéairement, **caractérisée en ce que** le premier étage principal (4) présente un poussoir en plusieurs parties, et, lors du passage de la position de repos à la position de commutation, une première partie de poussoir (6) actionnable à l'encontre d'une première charge élastique vient d'abord buter de manière étanche contre une seconde partie de poussoir (7) dans une première section de mouvement, moyennant quoi un passage de décharge vers la première sortie de décharge (5) est fermé, et, avec le mouvement également de la seconde partie de poussoir (7) dans une seconde section de mouvement ou d'une autre partie de poussoir dans une autre section de mouvement, un passage de sollicitation entre l'entrée de fluide (2) et la liaison fluidique vers le second étage principal (10) est libéré à l'encontre d'une seconde charge élastique, et le second étage principal (10) présente un poussoir en plusieurs parties, et, lors du passage de la position de repos à la position de commutation, une première partie de poussoir (12) pouvant être actionnée à l'encontre d'une première charge élastique vient d'abord buter de manière étanche contre une seconde partie de poussoir (13) dans une première section de mouvement, moyennant quoi un passage de décharge vers la seconde sortie de décharge (11) est fermé, et, avec le mouvement également de la seconde partie de poussoir (13) dans une seconde section de mouvement ou d'une autre partie de poussoir dans une autre section de mouvement, un passage de sollicitation entre la liaison fluidique et la sortie de fluide (3) est libéré à l'encontre d'une seconde charge élastique.

2. Soupape de sûreté (1) selon la revendication 1, **caractérisée en ce que** la seconde partie de poussoir (7) du premier étage principal ou la seconde partie de poussoir (7, 13) du premier et du second étage principal sont formées avec un canal pour fluide (8, 14) interne qui débouche dans une première ouverture tournée vers la première partie de poussoir (6, 12), dans laquelle la première ouverture est fermée par l'extrémité de la première partie de poussoir (6, 12) qui lui fait face lorsque la première partie de poussoir (6, 12) vient buter de manière étanche contre la seconde partie de poussoir (7, 13).

3. Soupape de sûreté (1) selon la revendication 2, **caractérisée en ce que** le canal pour fluide (8, 14) débouche à son extrémité opposée à la première ouverture dans une seconde ouverture qui est disposée dans la surface latérale de la seconde partie de poussoir (7, 13) et la première et la seconde ouverture débouchent dans des zones de la soupape de sûreté (1) pouvant être séparées l'une de l'autre de manière fluidique par la fermeture du canal pour fluide (8, 14).

4. Soupape de sûreté (1) selon la revendication 2, **caractérisée en ce que** le canal pour fluide (8, 14) est croisé à son extrémité opposée à la première ouverture par un alésage transversal ou par plusieurs alésages transversaux qui forment respectivement deux ouvertures d'alésage dans la surface latérale de la seconde partie de poussoir (7, 13), dans laquelle la première ouverture et les ouvertures d'alésage débouchent dans des zones de la soupape de sûreté (1) pouvant être séparées les unes des autres de manière fluidique par la fermeture du canal pour fluide (8, 14).

5. Soupape de sûreté (1) selon l'une des revendications 1 à 4,
**caractérisée en ce que** dans le trajet d'écoulement entre l'entrée de fluide (2) et le premier étage principal (4) est disposée une soupape de démarrage (31) qui peut être commutée par la pression appliquée à la sortie de fluide (3), dans laquelle la soupape de démarrage (31) passe d'une section transversale d'écoulement plus petite à une section transversale d'écoulement plus grande à partir du moment où un niveau de pression pouvant être prédéfini est atteint au niveau de la sortie de fluide (3), actionné par cette dernière en tant que pression de commutation.

6. Soupape de sûreté (1) selon la revendication 5, **caractérisée en ce que** la section transversale d'écoulement plus petite est formée par un canal pour fluide traversant le corps d'arrêt de la soupape de démarrage (31).

7. Soupape de sûreté (1) selon la revendication 6, **caractérisée en ce que** la soupape de démarrage (31) est réalisée avec un étranglement réglable pour le réglage du plus petit trajet d'écoulement.

8. Soupape de sûreté (1) selon l'une des revendications 1 à 7, **caractérisée en ce que** les passages de sollicitation du premier et du second étage principal (10) ou les passages de sollicitation du premier et du second étage principal (4, 10) et la section d'écoulement plus grande de la soupape de démarrage (31) sont disposés les uns par rapport aux autres de telle sorte que, dans les positions de commutation des soupapes, un trajet d'écoulement linéaire est formé entre les passages de sollicitation ou les passages de sollicitation et la section transversale d'écoulement plus grande.

9. Soupape de sûreté (1) selon la revendication 8, **caractérisée en ce que** l'entrée de fluide (2) et la sortie de fluide (3) sont également disposées de telle sorte que, conjointement avec les passages de sollicitation ou les passages de sollicitation et la section transversale d'écoulement plus grande, un trajet d'écoulement linéaire est formé entre l'entrée de fluide (2) et la sortie de fluide (3).

10. Soupape de sûreté (1) selon l'une des revendications 1 à 9,
**caractérisée en ce que** le premier et le second étage principal (4, 10) sont conçus de manière à pouvoir être actionnés par un fluide par le fait que la première partie de poussoir (6, 12) est réalisée, respectivement à son extrémité opposée à la seconde partie de poussoir (7, 13), avec un piston (17, 24) qui peut être sollicité par une pression de fluide sur son côté opposé à la première partie de poussoir (6, 12).

11. Soupape de sûreté (1) selon la revendication 10, **caractérisée en ce que** la sollicitation des pistons (17, 24) est commandée respectivement par l'intermédiaire d'une soupape pilote (15, 16) commutable, dans laquelle la sollicitation des pistons (17, 24) est effectuée respectivement par l'intermédiaire d'une alimentation interne en fluide de commande avec la pression appliquée à l'entrée de fluide (2).

12. Soupape de sûreté (1) selon l'une des revendications 1 à 11, **caractérisée en ce que** tous les composants sont réalisés sous forme d'unité modulaire dans un boîtier commun.
